(19) Europäisches Patentamt
European Patent Office
Office européen des brevets

(11) **EP 3 379 048 B1**

(12) **EUROPEAN PATENT SPECIFICATION**

(45) Date of publication and mention
of the grant of the patent:
**25.06.2025 Bulletin 2025/26**

(21) Application number: **18162986.6**

(22) Date of filing: **20.03.2018**

(51) International Patent Classification (IPC):
*F01N 5/02* (2006.01)   *F02G 5/02* (2006.01)
*F02B 37/00* (2006.01)   *F02B 37/013* (2006.01)
*F02B 37/20* (2006.01)   *F02B 41/02* (2006.01)
*F02B 37/16* (2006.01)

(52) Cooperative Patent Classification (CPC):
**F02G 5/02; F01N 5/02; F02B 37/004; F02B 39/10;
F02B 41/10;** Y02T 10/12

(54) **ENGINE SYSTEM**

MOTORSYSTEM

SYSTÈME DE MOTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.03.2017 IT 201700030576**

(43) Date of publication of application:
**26.09.2018 Bulletin 2018/39**

(73) Proprietor: **FPT Motorenforschung AG
9320 Arbon (CH)**

(72) Inventor: **JAEGER, Laurentius Walter
8048 ZÜRICH (CH)**

(74) Representative: **Studio Torta S.p.A.
Via Viotti, 9
10121 Torino (IT)**

(56) References cited:
EP-A1- 2 053 208     WO-A1-02/053890
US-A- 5 029 442     US-A1- 2016 153 349

**Description**

Technical field of the invention

The invention relates to the field of internal combustion engines and it can be applied both to the field of vehicle powering and boat powering and to the field of fixed installation for the production of electrical energy. In particular, the invention relates to the field of combined cycles.

State of the art

Combined cycles were born from the idea of recovering the heat contained in the gases produced by a primary engine, for example by a gas turbine, in order to turn in, through a proper thermodynamic cycle, into further electrical or mechanical power.

In the field of Diesel cycle internal combustion engines, especially for vehicle powering, exhaust gas treatment plays a particularly important role, as the laws currently enforced require a significant reduction of pollutants, among which there are CO, NOx, HC and particulate.

WO02053890A1 corresponds to the preamble of claim 1 and discloses a Diesel engine combined with a post-combustor and a turbine, arranged downstream of the post-combustor.

Diesel cycle engines usually implement an after-treatment system (ATS), which comprises different pollutant reduction devices, such as the DOC for the reduction of CO and HC, the DPF for the reduction of particulate and the SCR for the reduction of NOx. These acronyms are well known to a person skilled in the art. Some or all of these devices, which are arranged in series with one another, define an ATS. The SCR, in particular, is implemented in combination with a dosing device for a urea-based reactant (AdBlue), which is injected into the exhaust gas flow upstream of the SCR so as to reduce the NOx contained therein.

On the one hand, the excess urea is converted into ammonia, which counts as a pollutant emitted by the engine. On the other hand, the same urea, in conditions of low temperature, crystallizes, thus clogging the dosing device and possibly also the SCR; therefore, many efforts were made to improve the performances of ATS. However, results have not always been satisfactory.

The reason behind this invention is that of solving the problems deriving from the use of an ATS in a Diesel cycle engine, as already mentioned above.

A further object of the invention is to keep the efficiency of the Diesel cycle engine intact when the engine is properly integrated in a combined cycle; said combined cycle allows to eliminate the classical ATS for Diesel cycle engines, replacing it with a so-called 3-way catalyst, which is usually used in petrol engines.

Petrol engines, unlike Diesel engines, have a stoichiometric ratio between fuel and air, i.e. the so-called lambda factor is equal to 1.

Diesel cycle engines, instead, work with a lambda factor exceeding 1, which means that they operate with excess oxygen. On the other hand, though, 3-way catalysts are not capable of catalyzing NOx and CO in the presence of excess oxygen, namely with a lambda factor exceeding 1.

Summary of the invention

The aforementioned aims are reached by an engine system is provided as defined in the appended set of claims forming an integral part of the description.

Thanks to the claimed engine system, at least immediately upstream of the ATS the fuel flow rate has a lambda value equal to 1.0.

In detail, the supercharging pressure of the engine is increased in proportion to the increase in backpressure caused by the introduction of a turbine in the exhaust circuit of the engine and by the aforesaid combustor, so as to exploit the enthalpy increase generated by the combustor; therefore a turbine is inserted downstream of said combustion chamber. This turbine causes an increase in the pressure of the exhaust gases upstream of said turbine and, hence, also downstream of the exhaust valves of the internal combustion engine.

Preferably, the operating conditions of the Diesel engine are optimized by increasing the supercharging pressure of the engine with suitable compression means arranged in the intake circuit of the internal combustion engine, so that the supercharging pressure is approximately equal to the exhaust backpressure.

In other words, the means for injecting fuel into the combustor and the fresh air compressor arranged in the intake line are designed to operate in a coordinated manner.

Preferably, a lambda sensor (UEGO) is installed upstream of the second injection means and/or immediately upstream of the ATS, so as to perform a feedback control of the fuel dosage.

Therefore, the combustion device, which is operatively connected to the exhaust manifold of the Diesel cycle engine, completes the combustion thereof permitting the implementation of a 3-way catalyst, which requires a lambda factor equal to 1.0, without jeopardizing the efficiency of the Diesel cycle engine.

A 3-way catalyst not only is cheaper than an ATS for Diesel engine, but it is also more reliable over time, reducing maintenance times and costs.

Brief description of the figures

Further objects and advantages of the invention will be best understood upon perusal of the following detailed description of an embodiment thereof (and of relative variants) with reference to the accompanying drawings merely showing non-limiting examples, wherein:

- Figure 1 shows a basic example of the invention;
- Figure 2 shows a variant of figure 1, whereas figure 3 shows a combinations of figures 1 and 2;
- Figures 4 - 6 show further preferred variants of the invention;
- Figures 7 - 9 show further preferred variants of the invention;

The components represented with broken lines are optionals, whereas the broken connection lines are electric and/or data bus lines.

In the figures, the same numbers and the same reference letters indicate the same elements or components.

For the purposes of the invention, the term "second" component does not imply the presence of a "first" component. As a matter of fact, these terms are only used for greater clarity and should not be interpreted in a limiting manner.

Detailed description of embodiments

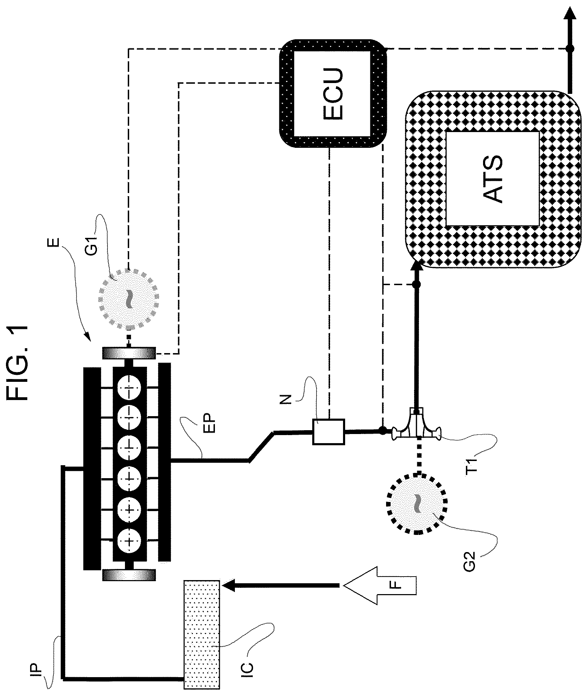

Figure 1 shows one of the basic variants of the engine system for vehicles or fixed installations according to the invention.

It comprises a Diesel cycle internal combustion engine E comprising an intake line IP and an exhaust line EP and first fuel injection means (not indicated).

On said exhaust line EP there are arranged second combustion means N for introducing and burning fuel in the exhaust line, so as to obtain a second combustion operatively downstream of the one performed in the Diesel engine, hence exploiting the residual oxygen of the exhaust gases of the first combustion.

This implies that no fresh air is introduced between the Diesel engine and the combustion chamber.

Hereinafter we will talk about "second combustion means N", remarking that they comprise any known device, such as a carburetor or injector, designed to introduce fuel, preferably Diesel fuel, into said combustion chamber arranged on the exhaust line, in order to obtain said second combustion.

A first turbine T1 is arranged on said exhaust line downstream of said second injection means.

According to the example of figure 1, the last element operatively connected to the exhaust line is a pollutant reduction device ATS (After Treatment System). It is designed to treat the exhaust gases produced both by the internal combustion engine E and by the second combustion means N.

According to the invention, a processing unit ECU, which preferably coincides with the control unit of the internal combustion engine E, is configured to control an injection/introduction of fuel operated by the second combustion means N, so as to maintain a lambda value equal to 1.0 in the exhaust gases entering said pollutant reduction device ATS. Evidently, at least one lambda or UEGO sensor is associated with the exhaust line. Preferably, said at least one sensor is associated with the exhaust line immediately upstream of the ATS.

Further sensors can be arranged downstream of the ATS.

For a better control of the injection of fuel in the exhaust line, it is possible to install a further lambda or UEGO sensor upstream of the second combustion means N. The arrangement of the sensors can be understood by a person skilled in the art and, hence, does not require further explanations.

Therefore, it is evident that there are first injection means to introduce fuel into the Diesel engine and second injection means to introduce fuel into the combustion chamber along the exhaust line and that the first injection means are separate and distinct from the second injection means.

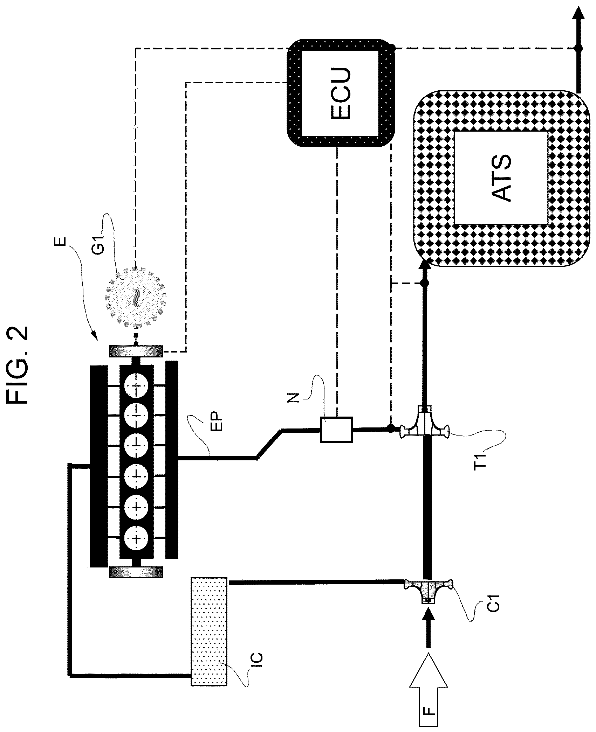

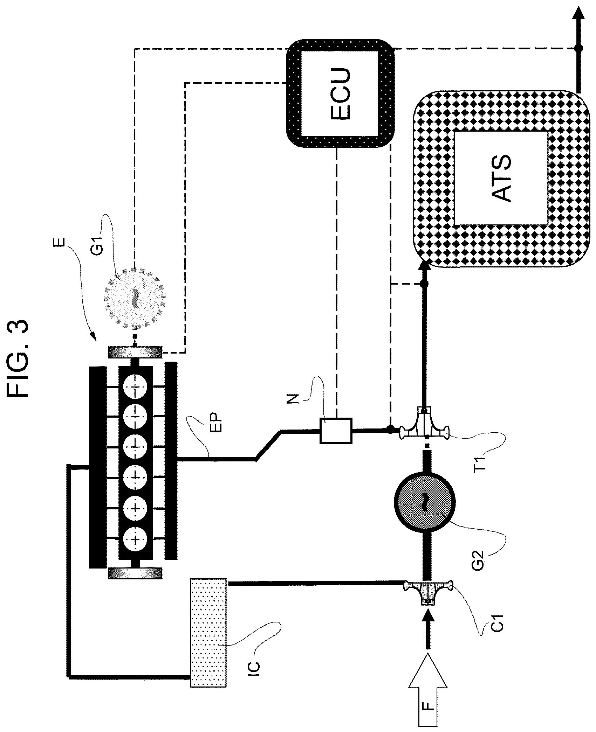

Preferably, the first turbine causes the rotation of an electric generator G2, see figure 1, or of a first compressor C1, see figure 2, or of both, see figure 3.

Alternatively, the compressor is driven by a dedicated electric motor (not shown).

According to figures 2 and 3, the first compressor C1 is arranged on the intake line IP and is designed to create a pressure in the intake line that is approximately equal to the backpressure generated by the first turbine T1, possibly together with further turbines, in case there is more than one turbine.

In particular, the pressures experienced by the internal combustion engine at the intake and at the exhaust preferably are such that the internal combustion engine produces a PMEP value - acronym standing from pumping mean effective pressure, a term that is well known to a person skilled in the art - close to zero.

More preferably, the supercharging pressure can be slightly smaller than the backpressure experienced at the exhaust, when there are exhaust gas recirculation means (EGR), which are described below.

The compression ratio defined for the compressor primarily is a function of the air/fuel ratio defined for the internal combustion engine E, and the following parameters play a role:

- Work point of the engine (load, rpm)
- Desired temperature at the outlet of the turbine
- Efficiency of the turbine
- Efficiency of the compressor
- Heating value of the fuel (Diesel)
- Stoichiometric air/fuel ratio
- Features of the air taken in and of the gases let out;
- Pressure losses of the overall engine system.

In order to make calculations easier, we can assume that the compression and expansion ratio of the compressor and of the turbine and the efficiencies of the compressor and of the turbine are equal to one another, leaving pressure losses aside

$$\frac{p_{before\ turbine}}{p_{after\ turbine}} \approx \frac{p_{after\ compressor}}{p_{before\ compressor}} \equiv ER_{turbine} \approx PR_{compressor} = f(\lambda, \dots)\ (1)$$

Therefore, the pressure ratio after and before the turbine (P_before_turbine/P_after_turbine) is approximately equal to the pressure ratio after and before the compressor (P_before_compressor/P_after_compressor).

We assume that the turbine enables a polytropic expansion

$$\left(\frac{T_{before\ turbine}}{T_{after\ turbine}}\right)^{\frac{n}{n-1}} = PR_{turbine} \qquad (2)$$

With the temperature after and before the turbine (T_before_turbine/T_after_turbine), wherein the temperature downstream of the turbine can be approximately 700°K. Furthermore, "n" is a function of the efficiency of the turbine and of the properties of the fluid flowing through it.

The flow rate of the fuel to be injected along the exhaust line in order to obtain a lambda value = 1.0 determines the enthalpy which is added to the exhaust gas:

$$dh = \frac{\dot{m} * (\lambda - 1)}{stoch.\ ratio} * heat\ value_{fuel} \qquad (4)$$

Wherein dh is the enthalpy variation, which depends on the fuel quality and quantity. The temperature variation of the total exhaust gas is given by:

$$dT = \frac{dh}{average\ specific\ heat\ capacity * \dot{m}} \qquad (5)$$

Namely by the ratio between the enthalpy increase divided by the product between the heating value of the fuel and its flow rate m $\dot{m}$.

The internal combustion engine E can drive the transmission of a terrestrial or boat vehicle or can cause the rotation of a first electro generator G1.

Alternatively, the internal combustion engine E is connected to a first generator G1, whereas the first turbine T1 is connected to the transmission of a vehicle or a boat.

According to a preferred variant of the invention, the first compressor C1 comprises two or more compression stages, which are pneumatically connected in series to one another so as to define as many consecutive stages of compression of fresh air F to be introduced into the internal combustion engine E.

The operation of the first compressor C1 is coordinated with the quantity of fuel injected in the exhaust line, in particular the compressor increases the degree of supercharging proportionally to an increase in the fuel injected in the exhaust line. In other words, the flow of injected fuel is proportional to the pressure generated by the compression stage, so as to ensure a supercharging pressure that is approximately equal to the backpressure experienced by the internal combustion engine in the exhaust manifold.

Evidently, in case there are different supercharging stages, this adjustment can be made in one or more of them.

Preferably, the compressor C1, regardless of whether it has one or more compression stages, is connected to the first turbine T1 in axis.

According to figure 3, said second generator G2 is directly fitted on the transmission shaft connecting said first turbine to said compressor C1.

According to a preferred embodiment of the invention, which combines with the previous ones, the internal combustion engine comprises at least one cylinder and a relative piston as well as a relative intake valve, and wherein said intake valve is controlled so as to be closed during a compression cycle long before or after the piston has left a relative bottom dead centre. In other words, a timing of the intake valve/s preferably is carried out according to a Miller or Atkins cycles, preferably leaving the compression ratio of the engine unchanged.

Advantageously, this timing of the valves allows the internal combustion engine according to the invention to operate with the same pressure limits that the engine would have if it were supercharged in a conventional manner (base IC):

$$\frac{volumetric\ efficiency_{GPT\ IC\ engine}}{volumetric\ efficiency_{base\ IC\ engine}} \sim \left(\frac{boost\ pressure_{base\ IC\ engine}}{boost\ pressure_{GPT\ IC\ engine}}\right)^{x}, x$$

$$= f(fluid)$$

Hence, the induction ratio of the valves and, therefore, the volume efficiency can be reduced proportionally to the increase in the supercharging pressure.

Figures 1 - 9 show that the intake line IP houses at least one cooler IC for the compressed air introduced into the internal combustion engine E.

A further cooler can be housed between two consecutive compression stages.

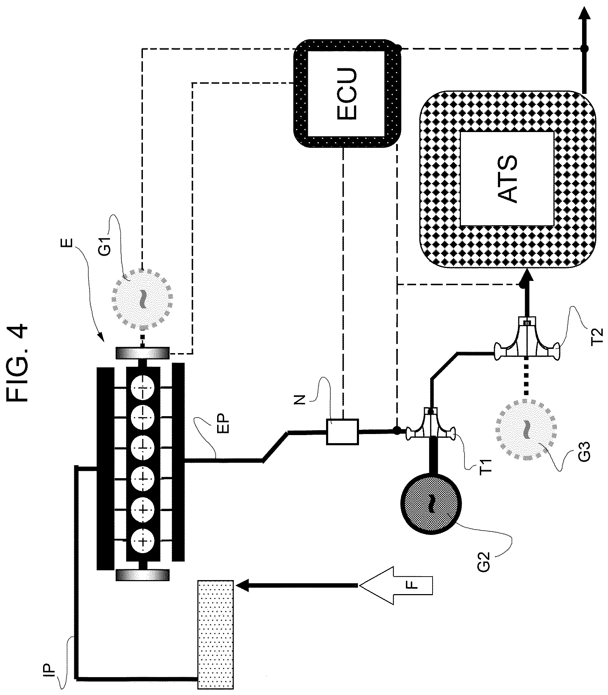

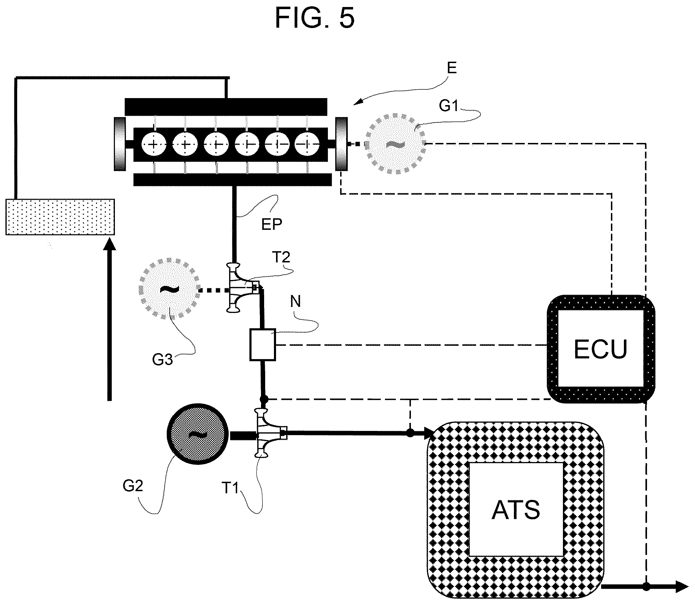

Figure 4 shows a second turbine T2 arranged on said exhaust line downstream of the first turbine T1. In figure 5, on the other hand, the second turbine T2 is arranged upstream of the second combustion means N.

In both cases, this second turbine T2 too can comprise third dedicated injection means (not shown), which are distinct from the second combustion means N and are arranged immediately upstream of the second turbine. By so doing, the diagram would also comprise, besides the internal combustion engine E with the relative fuel first injection means, second and third injection means, which are arranged immediately upstream of each turbine T1 and T2. Therefore, in this case, the combustion of the residual oxygen contained in the exhaust gases of the internal combustion engine is divided between the second and the third injection means.

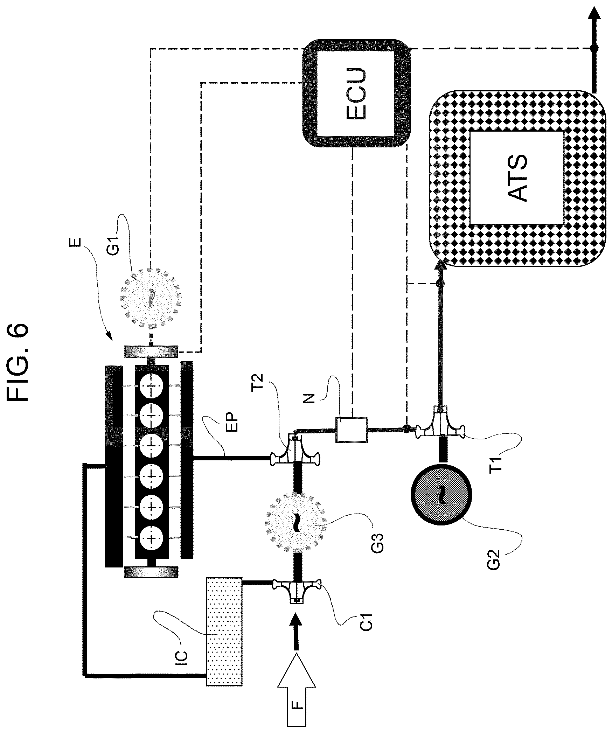

According to figures 4 and 5, the second turbine T2 has, as a load, a third generator G3. Alternatively, see figure 6, the second turbine T2 can cause the rotation of a (further) compressor C1 and, if necessary, also of a third generator G3.

The solution of figure 6 can be combined with the solution of figures 2 or 3, which means that the first turbine T1 causes the rotation of a first compressor C1, whereas the second turbine causes the rotation of a further compressor, which is not shown.

According to a further preferred embodiment of the invention, which can be combined with any of the previous ones, the system comprises means to perform a waste heat recovery (WHR) cycle comprising a first heat exchanger associated with said exhaust line so as to extract heat from said exhaust gases.

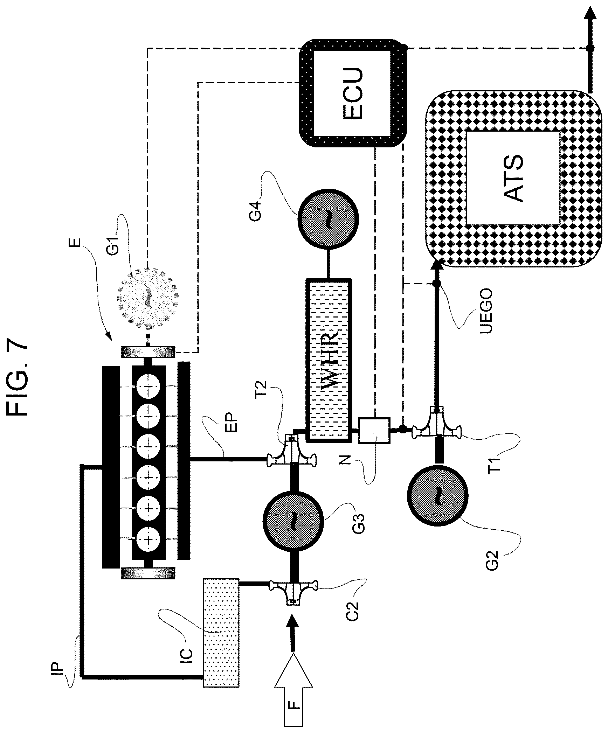

In order to make the drawings simpler, in figures 7 - 9 the entire WHR cycle is represented with one block, but it comprises said first heat exchanger defining a hot source, a second exchanger defining a cold source, which receives heat in order to allow the carrier means to condense, and at least one steam turbine. These are known concepts.

According to a first preferred variant of the invention, which is not shown herein, said WHR is arranged immediately downstream of the internal combustion engine with reference to figures 1 - 3.

Preferably, the carrier means of the recovery cycle is water with suitable additives or an organic fluid compound.

The steam turbine of the WHR can also be connected to a vehicle transmission or to a fourth electric generator so as to generate electrical energy.

According to the variant of figure 7, the WHR is arranged immediately downstream of the second turbine T2. It is evident that the diagram of figure 7 was built on the basis of the diagram of figure 6, but the presence of the compressor is optional in case the second turbine is connected to the generator G3.

Therefore, the second combustion takes place downstream of the WHR.

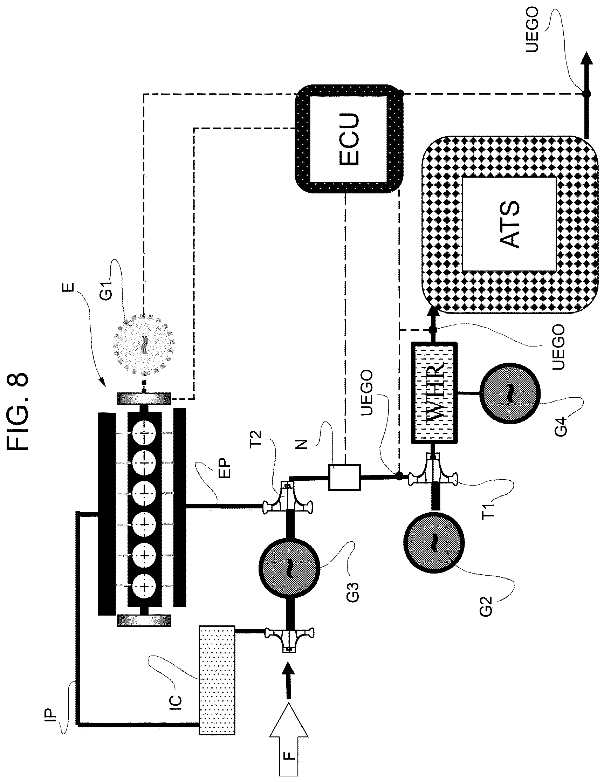

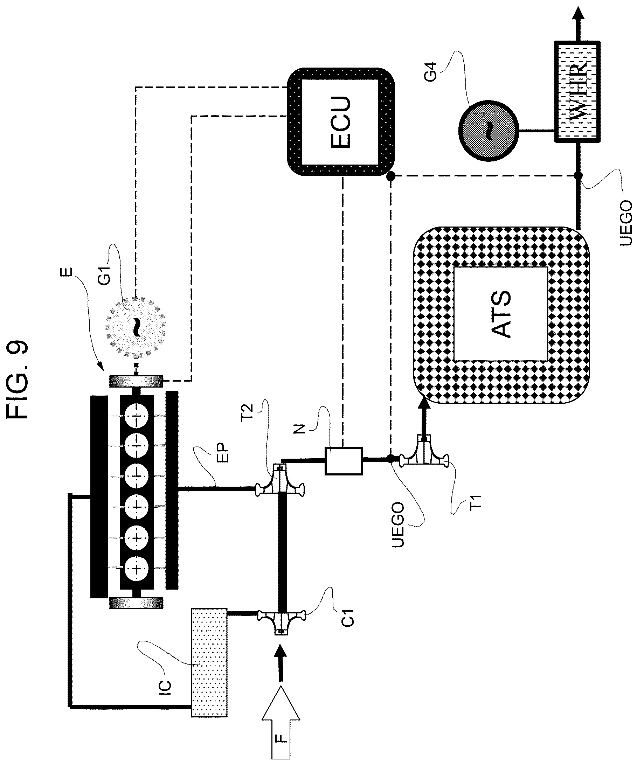

According to the diagrams of figures 8 and 9, the WHR is arranged downstream of the first turbine T1 and, respectively, upstream or downstream of the ATS.

What already disclosed above also applies to figures 8 and 9, namely the fact that the presence of the second turbine T2 upstream or immediately downstream of the first turbine T1 is optional, just like the relative loads, such as a relative compressor and/or generator.

According to any one of the variants described above, the diagram can comprise exhaust gas recirculation means (EGR). They can be high-pressure or low-pressure exhaust gas recirculation means.

When they are low-pressure exhaust gas recirculation means, a point of the exhaust line immediately upstream or immediately downstream of the ATS is connected to a point upstream of said one or more compressors arranged on the intake line.

When they are high-pressure exhaust gas recirculation means, a point of the exhaust line upstream of at least one turbine is connected to a point downstream of at least one compressor.

Preferably said exhaust gas drawing point is not located between the second combustion means N and said first turbine.

An EGR valve is controlled by the processing unit ECU so as to manage the quantity of recirculated fluid.

When a WHR is implemented, the drawing point on the exhaust line preferably is obtained in a point immediately downstream of the first heat exchanger of the WHR, so as to lower the temperature of the gases to be recirculated, thus creating a high-pressure or low-pressure EGR according to the diagrams of figure 7.

As far as the ATS is concerned, thanks to the invention, it is of the type requiring the lambda to be 1.0, exactly like petrol engines. Therefore, even though the internal combustion engine is a Diesel cycle engine, the ATS is of the type used in petrol engines, a so-called 3-way catalyst, which has a very small cost.

The invention can be applied to any ATS requiring lambda = 1.0, equivalent to a 3-way catalyst.

The fuel injected along the exhaust line is not necessarily Diesel fuel, it can be any kind of fuel.

The high temperature reached upstream of the first turbine T1 determines a significant boost. In order to limit the peak pressure of the cylinder, which would lead to significant mechanical stresses, the volume efficiency must be reduced according to what described in relation to the implementation of the Miller/Atkinson timing.

Therefore, a PMEP slightly above or under the zero value is a target of the optimal sizing of the system, so as to enable a high-pressure EGR or so as to maximize the efficiency of the engine.

The supplying maps of the internal combustion engine must preferably be such as to keep the lambda value as low as possible, so as to maintain the temperature of the exhaust gases within a temperature interval that is compatible with the turbine/s arranged on the exhaust line.

By so doing, the turbine T1 can have $\lambda = 1$, because the quantity of oxygen contained in the exhaust gases is lower than the one of the environment air. On the contrary, gas turbines usually operate with excess oxygen, i.e. with lambda >>1.

Gas turbines usually cannot work with lambda = 1, because they would experience gas temperatures that are too high.

Since, according to the invention, two distinct combustions are performed, the first one in the internal combustion engine and the second one downstream thereof, the temperatures reached by the gases turn out to be remarkably lower because of the following reasons:

- the exhaust gases involved in the second combustion have a high thermal capacity, which helps limit the temperature increase resulting from the second combustion;
- the exhaust gases expand both in the internal combustion engine and, possibly, even downstream thereof, namely before being involved in the second combustion.

As already mentioned above, the internal combustion engine operates as a combustor, whereas the turbine, besides completing the combustion, operates as a turbocharger for the internal combustion engine; therefore, in this variant, see for example figures 2 and 3, there is complete interdependency between the two combustion stages.

The configuration of figures 5 - 9 is particularly advantageous since the exhaust gases immediately downstream of the internal combustion engine have a significant enthalpy content and, therefore, the latter can advantageously be exploited through the second turbine T2 arranged upstream of the second fuel injection means N.

It should be pointed out that the transmission shafts of the different turbines can be operatively associated, for example through gear transmission organs, so as to operate, together, on a vehicle transmission or on a generator defining a turbo-compound diagram, alternatively to a relative compressor or to a dedicated electric generator.

Any one of the diagrams can also be used so that the turbines share a same shaft.

Similarly, any one of the compressors, rather than being caused to rotate by the shaft of a turbine, can be driven by an electric motor.

It is evident that the ECU controls the Diesel cycle engine, the generators/electric motors G1 - G4, monitors the other things, the quantity of oxygen in the exhaust gases downstream of the Diesel engine and/or immediately upstream of the ATS, and controls the introduction of fuel of the second combustion means N into the combustion chamber.

When reading the description above, a skilled person can carry out the subject-matter of the invention without introducing further manufacturing details. The elements and features contained in the different preferred embodiments, drawings included, can be combined with one another, without for this reason going beyond the scope of protection of this patent application as claimed in the appended set of claims.

**Claims**

1. An engine system for vehicles and fixed installations based on Diesel cycle comprising

   - a Diesel cycle internal combustion engine (E) comprising an intake line (IP) and an exhaust line (EP) and respective first fuel injection means,
   - a combustion chamber arranged on the exhaust line of the Diesel cycle engine, so as to burn the residual oxygen contained in the exhaust gases produced by the Diesel cycle engine,
   - a first turbine (T1) operatively associated with said exhaust line (EP),
   - second combustion means (N) comprising an injector for introducing and burning fuel in said combustion chamber arranged downstream of said internal combustion engine and immediately upstream of said first turbine (T1),
   - a pollutant reduction device (ATS) connected to said exhaust line downstream of said first turbine (T1) to treat the exhaust gases produced by said Diesel cycle engine and by said second combustion means (N),
   - processing means (ECU) configured to control at least a combustion of said second combustion means (N);

   **characterized in that** said processing means (ECU) are configured to control the introduction of fuel operated by said second combustion means (N) so as to maintain a lambda value of the exhaust gases entering said pollutant reduction device (ATS) equal to 1.0; wherein said pollutant reduction device (ATS) is a 3-way catalyst.

2. The system according to claim 1, further comprising a lambda or UEGO sensor installed immediately upstream of said pollutant reduction device (ATS) so as to perform a feedback control of the fuel dosage.

3. The system according to claim 1 or 2, wherein no fresh air is introduced between the Diesel engine and the combustion chamber.

4. The system according to claim 1, wherein said first turbine helps define a backpressure in said exhaust line (EP), and wherein a first compressor (C1, C2), driven by said first turbine or by a dedicated electric motor, defining one or more compression stages, is arranged on said intake line (IP), and wherein said first compressor is suitable to provide a pressure on the intake line approximately-equal to said backpressure.

5. The system according to claim 4, wherein said compressor and said second combustion means (N) for introducing and burning fuel in said exhaust line are arranged so as to cooperate in a coordinated manner.

6. The system according to any one of the claims 1 or 5, wherein said first turbine is designed to guide in rotation an electric motor-generator.

7. The system according to any one of the claims 1 to 6, wherein said Diesel cycle engine comprises at least one cylinder and a respective piston and a respective intake valve, and wherein said intake valve is controlled so as to be closed during a compression cycle before or after the piston has left a respective bottom dead centre, to achieve a Miller or Atkinson cycle.

8. The system according to any one of the preceding claims, further comprising a further turbine (T2) arranged in said exhaust line downstream of said first turbine.

9. The system according to any one of claims 1 to 7, further comprising a further turbine (T2) arranged in said exhaust line upstream of said second combustion means (N).

10. The system according to claim 8 or 9, wherein said further turbine (T2) drives in rotation a respective second compressor (C3, C3') arranged on said intake line.

11. The system according to -claim 8 or 9, wherein said further turbine drives in rotation a respective electric generator.

12. The system according to any one of the preceding claims, further comprising means for obtaining a heat recovery cycle (WHR) comprising a heat exchanger associated with said exhaust line to extract heat from said exhaust gases, wherein said heat exchanger is arranged upstream of said second combustion means (N).

13. The system according to any one of the claims 1 to 11, further comprising means for obtaining a heat recovery cycle (WHR) comprising a heat exchanger associated with said exhaust line to extract heat from said exhaust gases, wherein said heat exchanger is arranged downstream of said first turbine (T1).

14. The system according to any of the preceding claims, further comprising exhaust gases recirculation means (EGR) for high pressure (HEGR) or low pressure (LEGR) or internal EGR (IEGR), wherein said recirculation means are controlled as a function of a desired (lower) volumetric efficiency of said internal combustion engine.

**Patentansprüche**

1. Kraftmaschinensystem für Fahrzeuge und feste Installationen auf der Grundlage des Dieselkreisprozesses, das Folgendes umfasst:

   - eine Dieselkreisprozess-Brennkraftmaschine (E), die eine Einlassleitung (IP) und eine Abgasleitung (EP) und jeweilige erste Kraftstoffeinspritzmittel umfasst,
   - eine Brennkammer, die an der Abgasleitung der Dieselkreisprozess-Kraftmaschine angeordnet ist, um den Restsauerstoff zu verbrennen, der in den Abgasen enthalten ist, die durch die Dieselkreisprozess-Kraftmaschine erzeugt werden,
   - eine erste Turbine (T1), die der Abgasleitung (EP) funktionstechnisch zugeordnet ist,
   - zweite Verbrennungsmittel (N), die eine Einspritzeinrichtung zum Einleiten und Verbrennen von Kraftstoff in der Brennkammer umfassen und stromabwärts der Brennkraftmaschine und unmittelbar stromaufwärts der ersten Turbine (T1) angeordnet sind,
   - eine Schadstoffverringerungsvorrichtung (ATS), die mit der Abgasleitung stromabwärts der ersten Turbine (T1) verbunden ist, um die Abgase zu behandeln, die durch die Dieselkreisprozess-Kraftmaschine und durch die zweiten Verbrennungsmittel (N) erzeugt werden,
   - Verarbeitungsmittel (ECU), die konfiguriert sind, mindestens eine Verbrennung der zweiten Verbrennungsmittel (N) zu steuern;

   **dadurch gekennzeichnet, dass** die Verarbeitungsmittel (ECU) konfiguriert sind, die Einleitung von Kraftstoff, die durch die zweiten Verbrennungsmittel (N) betrieben wird, zu steuern, um einen Lambdawert der Abgase, die in die Schadstoffverringerungsvorrichtung (ATS) eintreten, auf 1,0 zu halten; wobei die Schadstoffverringerungsvorrichtung (ATS) ein Dreiwegekatalysator ist.

2. System nach Anspruch 1, das ferner einen Lambda- oder UEGO-Sensor umfasst, der unmittelbar stromaufwärts der Schadstoffverringerungsvorrichtung (ATS) installiert ist, um eine Rückkopplungssteuerung der Kraftstoffdosierung durchzuführen.

3. System nach Anspruch 1 oder 2, wobei zwischen der Dieselkraftmaschine und der Brennkammer keine Frischluft eingeleitet wird.

4. System nach Anspruch 1, wobei die erste Turbine hilft, einen Gegendruck in der Abgasleitung (EP) zu definieren, ein erster Kompressor (C1, C2), der durch die erste Turbine oder durch einen fest zugeordneten Elektromotor angetrieben wird und eine oder mehrere Komprimierungsstufen definiert, an der Einlassleitung (IP) angeordnet ist und der erste Kompressor geeignet ist, einen Druck in der Einlassleitung bereitzustellen, der ungefähr gleich dem Gegendruck ist.

5. System nach Anspruch 4, wobei der Kompressor und die zweiten Verbrennungsmittel (N) zum Einleiten und Verbrennen von Kraftstoff in der Abgasleitung derart angeordnet sind, dass sie in einer koordinierten Weise zusammenzuwirken.

6. System nach einem der Ansprüche 1 oder 5, wobei die erste Turbine ausgelegt ist, einen Elektromotorgenerator drehend zu führen.

7. System nach einem der Ansprüche 1 bis 6, wobei die Dieselkreisprozess-Kraftmaschine mindestens einen Zylinder und einen jeweiligen Kolben und ein jeweiliges Einlassventil umfasst und das Einlassventil gesteuert wird, während eines Komprimierungszyklus geschlossen zu werden, bevor oder nachdem der Kolben einen jeweiligen unteren Totpunkt verlassen hat, um einen Miller- oder einen Atkinson-Kreisprozess zu erreichen.

8. System nach einem der vorhergehenden Ansprüche, das ferner eine weitere Turbine (T2) umfasst, die in der Abgasleitung stromabwärts der ersten Turbine angeordnet ist.

9. System nach einem der Ansprüche 1 bis 7, das ferner eine weitere Turbine (T2) umfasst, die in der Abgasleitung stromaufwärts der zweiten Verbrennungsmittel (N) angeordnet ist.

10. System nach Anspruch 8 oder 9, wobei die weitere Turbine (T2) einen jeweiligen zweiten Kompressor (C3, C3') der in der Einlassleitung angeordnet ist, drehend antreibt.

11. System nach Anspruch 8 oder 9, wobei die weitere Turbine einen jeweiligen elektrischen Generator drehend antreibt.

12. System nach einem der vorhergehenden Ansprüche, das ferner Mittel zum Erhalten eines Wärmerückgewinnungszyklus (WHR) umfasst, die einen Wärmetauscher umfassen, der der Abgasleitung zugeordnet ist, um Wärme aus den Abgasen zu extrahieren, wobei der Wärmetauscher stromaufwärts der zweiten Verbrennungsmittel (N) angeordnet ist.

13. System nach einem der Ansprüche 1 bis 11, das ferner Mittel zum Erhalten eines Wärmerückgewinnungszyklus (WHR) umfasst, die einen Wärmetauscher umfassen, der der Abgasleitung zugeordnet ist, um Wärme aus den Abgasen zu extrahieren, wobei der Wärmetauscher stromabwärts der ersten Turbine (T1) angeordnet ist.

14. System nach einem der vorhergehenden Ansprüche, das ferner Abgasrückführungsmittel (AGR) für hohen Druck (HAGR) oder niedrigen Druck (LAGR) oder interne AGR (IAGR) umfasst, wobei die Rückführungsmittel als eine Funktion eines gewünschten (niedrigeren) Liefergrads der Brennkraftmaschine gesteuert werden.

**Revendications**

1. Système moteur pour véhicules et installations fixes basés sur le cycle diesel comprenant

- un moteur à combustion interne à cycle diesel (E) comprenant une conduite d'admission (IP) et une conduite d'échappement (EP) et de premiers moyens d'injection de carburant respectifs,
- une chambre de combustion agencée sur la conduite d'échappement du moteur à cycle diesel, de façon à brûler l'oxygène résiduel contenu dans les gaz d'échappement produits par le moteur à cycle diesel,
- une première turbine (T1) associée de manière fonctionnelle à ladite conduite d'échappement (EP),
- de deuxièmes moyens de combustion (N) comprenant un injecteur pour introduire et brûler du carburant dans ladite chambre de combustion agencée en aval dudit moteur à combustion interne et immédiatement en amont de ladite première turbine (T1),
- un dispositif de réduction des polluants (ATS) raccordé à ladite conduite d'échappement en aval de ladite première turbine (T1) pour traiter les gaz d'échappement produits par ledit moteur à cycle diesel et par lesdits deuxièmes moyens de combustion (N),
- des moyens de traitement (ECU) configurés pour commander au moins une combustion desdits deuxièmes moyens de combustion (N) ;

**caractérisé en ce que** lesdits moyens de traitement (ECU) sont configurés pour commander l'introduction de carburant mise en œuvre par lesdits deuxièmes moyens de combustion (N) de façon à maintenir une valeur lambda des gaz d'échappement entrant dans ledit dispositif de réduction des polluants (ATS) égale à 1,0 ; dans lequel ledit dispositif de réduction des polluants (ATS) est un catalyseur à 3 voies.

2. Système selon la revendication 1, comprenant en outre une sonde lambda ou UEGO installée immédiatement en amont dudit dispositif de réduction des polluants (ATS) de façon à réaliser une commande de rétroaction du dosage de carburant.

**3.** Système selon la revendication 1 ou 2, dans lequel aucun air frais n'est introduit entre le moteur diesel et la chambre de combustion.

**4.** Système selon la revendication 1, dans lequel ladite première turbine aide à définir une contrepression dans ladite conduite d'échappement (EP), et dans lequel un premier compresseur (C1, C2), entraîné par ladite première turbine ou par un moteur électrique dédié, définissant un ou plusieurs étages de compression, est agencé sur ladite conduite d'admission (IP), et dans lequel ledit premier compresseur est approprié pour fournir une pression sur la conduite d'admission approximativement égale à ladite contrepression.

**5.** Système selon la revendication 4, dans lequel ledit compresseur et lesdits deuxièmes moyens de combustion (N) pour introduire et brûler du carburant dans ladite conduite d'échappement sont agencés de façon à coopérer de manière coordonnée.

**6.** Système selon l'une quelconque des revendications 1 ou 5, dans lequel ladite première turbine est conçue pour guider en rotation un moteur-générateur électrique.

**7.** Système selon l'une quelconque des revendications 1 à 6, dans lequel ledit moteur à cycle diesel comprend au moins un cylindre et un piston respectif et une soupape d'admission respective, et dans lequel ladite soupape d'admission est commandée de façon à être fermée pendant un cycle de compression avant ou après que le piston ait quitté un point mort bas respectif, pour obtenir un cycle de Miller ou d'Atkinson.

**8.** Système selon l'une quelconque des revendications précédentes, comprenant en outre une autre turbine (T2) agencée dans ladite conduite d'échappement en aval de ladite première turbine.

**9.** Système selon l'une quelconque des revendications 1 à 7, comprenant en outre une autre turbine (T2) agencée dans ladite conduite d'échappement en amont desdits deuxièmes moyens de combustion (N).

**10.** Système selon la revendication 8 ou 9, dans lequel ladite autre turbine (T2) entraîne en rotation un deuxième compresseur (C3, C3) respectif agencé sur ladite conduite d'admission.

**11.** Système selon la revendication 8 ou 9, dans lequel ladite autre turbine entraîne en rotation un générateur électrique respectif.

**12.** Système selon l'une quelconque des revendications précédentes, comprenant en outre des moyens d'obtention d'un cycle de récupération de chaleur (WHR) comprenant un échangeur de chaleur associé à ladite conduite d'échappement pour extraire de la chaleur desdits gaz d'échappement, dans lequel ledit échangeur de chaleur est agencé en amont desdits deuxièmes moyens de combustion (N).

**13.** Système selon l'une quelconque des revendications 1 à 11, comprenant en outre des moyens d'obtention d'un cycle de récupération de chaleur (WHR) comprenant un échangeur de chaleur associé à ladite conduite d'échappement pour extraire de la chaleur desdits gaz d'échappement, dans lequel ledit échangeur de chaleur est agencé en aval de ladite première turbine (T1).

**14.** Système selon l'une quelconque des revendications précédentes, comprenant en outre des moyens de recyclage des gaz d'échappement (EGR) pour un EGR haute pression (HEGR), basse pression (LEGR) ou interne (IEGR), dans lequel lesdits moyens de recyclage sont commandés en fonction d'un rendement volumétrique (inférieur) souhaité dudit moteur à combustion interne.

FIG. 1

E

G1

EP

ECU

N

ATS

T1

G2

F

IC

IP

FIG. 2

EP 3 379 048 B1

# FIG. 3

FIG. 4

FIG. 5

FIG. 6

FIG. 7

EP 3 379 048 B1

FIG. 8

## FIG. 9

EP 3 379 048 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02053890 A1